# EUROPEAN PATENT SPECIFICATION

(11) **EP 2 520 339 B1**
(45) Date of publication and mention of the grant of the patent: **06.12.2017**
(21) Application number: 11164863.0
(22) Date of filing: 04.05.2011
(51) Int. Cl.: A62C 35/08, A62C 37/36, A62C 37/48, H01L 41/113, A62C 35/02, A62C 13/64, A62C 13/00

(54) **Self powered automatic fire extinguisher based upon a mechanical heat detection mechanism and a pyrotechnical actuator fired by a piezoelectric device**
Selbstangetriebener automatischer Feuerlöscher auf Grundlage eines mechanischen Hitzedetektionsmechanismus und ein von einer piezoelektrischen Vorrichtung angefeuerter pyrotechnischer Aktuator
Extincteur de feu automatique autoalimenté basé sur un mécanisme de détection thermique mécanique et actionneur pyrotechnique déclenché par un dispositif piézoélectrique

(43) Date of publication of application: 07.11.2012
(73) Proprietor: Kidde Technologies Inc., Wilson, NC 27896 (US)
(72) Inventor: Smith, Paul, Camberley, Surrey, GU15 4AY (GB); Dunster, Robert G., Burnham, Slough, Berkshire, SL1 6ER (GB); Dutson, Beth A., Hook, Hampshire, RG27 9SU (GB); Weller, Paul W., Cippenham, Slough, Berkshire, SL1 5EG (GB)
(74) Representative: Taylor, Adam David

(56) References cited:
- DE-A1-102006 008 384
- GB-A- 1 545 776

## Description

### BACKGROUND

This invention relates to fire detection and suppression, and more particularly to pyrotechnically actuated fire extinguishers which may be installed within vehicles.

There are a wide variety of fire detection and extinguishing technologies and fire extinguisher constructions. These include propellant-actuated extinguishers and extinguishers charged with compressed and/or liquified gas.

Early propellant-actuated extinguisher disclose a fire extinguisher wherein a liquid extinguishing medium, such as bromotrifluoromethane, is expelled from its container by gas evolved from the burning of a pyrotechnic charge. The charge is originally stored in a container which includes electric squibs. The charge container is mounted in an upper end of the vessel within a container cup. Opposite the container cup, an outlet from the vessel is formed by an elbow fitting sealed by a rupturable diaphragm. Ignition of the pyrotechnic charge ruptures a wall of the charge container and vents combustion gases into the vessel. The combustion gases serve as a gas piston acting on the surface of the liquid rupturing the diaphragm which sealed the outlet and propelling the liquid out of the extinguisher.

The application of a propellant-actuated extinguisher to use in modem vehicles discloses an extinguisher in many ways similar, but the exemplary fire suppressant utilized is Halon 1301 or various hydroflurocarbon agents such as HFC227ea or FE36. The lower end of the extinguisher vessel is sealed by a rupturable diaphragm. A gas generating device is mounted atop the neck of the vessel. The exemplary gas generating composition is 62% sodium oxide and 38% copper oxide. In either exemplary example, the propellant-actuated extinguisher again contains a pyrotechnic charge to create a gaseous pressure in a bottle. The pyrotechnic charge is wired to the vehicle fire and overheat detection system, which will send an electric current to activate the charge upon detection of an overheat or fire condition.

In extinguishers charged with compressed or liquefied gas, a valve is opened to actuate the extinguisher. In these extinguishers, a pyrotechnical actuator is supplied with an electric current that ignites an internal pyrotechnical charge. The pressure energy produced by the pyrotechnic charge is turned into mechanical energy, such as by moving a firing pin. In one example, the firing pin pushes against a lever that turns a spindle. The spindle releases a beam that allows a plug to open in the valve, which allows for the compressed contents of the extinguisher to be released.

In many integrated detection and suppression systems electrical power is supplied from a detection system to a pyrotechnical actuator to initiate fire suppression. This leaves the system vulnerable to failure of the power supply, detection system or the interconnecting cables between the detection system and the fire suppression actuation mechanism. While a fully powered detection system may offer the best performance it is clearly unacceptable for the extinguishing system to fail during a fire event.

DE 102006008384 discloses a fire extinguishing device having a pyrotechnic pressure generating unit comprising ignition powder and pressure generating powder, the ignition powder being ignited by a spark generating unit.

Another fire extinguishing apparatus is known from document GB 1 545 776 A.

### SUMMARY

In one aspect the invention provides a fire extinguishing apparatus comprising: a structure defining a first chamber containing an electrically operable explosive device; a piezoelectric cell electrically coupled to the electrically operable explosive device and capable of producing an electrical output in response to an impact upon the piezoelectric cell; a pressure container with a fire suppressant or fire retardant material therein; a valve assembly arranged to control the release of the contents of the pressure container; and a temperature activated force mechanism including a temperature sensing apparatus for producing a mechanical force at an established temperature sensed by the temperature sensing apparatus; the temperature activated force mechanism being arranged to apply the mechanical force produced by the temperature activated force mechanism to make the impact upon the piezoelectric cell to produce the electrical output to actuate the electrically operable explosive device to cause the valve assembly to open and release the contents of the pressure container.

In another embodiment, a fire suppression apparatus includes a pressure container with a material contained therein and a cartridge in communication with the pressure container. The cartridge has a container cup with a pyrotechnic actuator with electrical leads. A piezoelectric electric element is connected to the electrical leads, and a mechanical detection mechanism based upon a temperature sensitive element capable of generating a mechanical force above a threshold temperature of the temperature sensitive element.

In yet another embodiment, a fire detection and suppression system includes at least one fire detection apparatus, a power supply, a control unit, at least one electrical lead wire from the control unit to a piezoelectric generator, a pressure container with a material contained therein, a pyrotechnic actuator with electrical leads to the piezoelectric
generator; and a mechanical detection mechanism based upon a temperature sensitive element capable of generating a mechanical force above a threshold temperature.

### BRIEF DESCRIPTION OF THE DRAWINGS

The present invention will be further explained with reference to the drawing figures listed below, wherein like structures are referred to by like numerals throughout the several views.
Fig. 1 is a combined schematic and elevation view showing an integrated detection and suppression system.
Fig. 2 is an elevation view of a suppression system.
Fig. 3 is a cross-section of a temperature sensitive mechanism for a suppression system.
Fig. 4 is a cross-section of another embodiment of a temperature sensitive mechanism for a suppression system.
Fig. 5 is a cross-section of a third embodiment of a temperature sensitive mechanism for a suppression system.
Fig. 6 is a cross-section of a fourth embodiment of a temperature sensitive mechanism for a suppression system.

While the above-identified drawing figures set forth individual embodiments of the invention, other embodiments are also contemplated, as noted in the discussion. In all cases, this disclosure presents the invention by way of representation and not limitation. It should be understood that numerous other modifications and embodiments can be devised by those skilled in the art which fall within the scope of the principles of this invention.

### DETAILED DESCRIPTION

A mechanical detection mechanism based upon a temperature sensitive element can be employed to generate a mechanical force above a threshold temperature. The generated mechanical force can then be applied to a piezoelectric element to produce an electrical pulse to fire a pyrotechnical actuator. The piezoelectric element could be either a piezoelectric generator which applies power to fire an existing pyrotechnical actuator or a piezoelectric element to directly ignite a pyrotechnical composition within a pyrotechnical actuator. The aim of the device is to provide a single actuation element that is suitable for use with either an electrically operated detection system or an unpowered mechanically operated detection system. Such a device would be compatible with existing system designs allowing the use of the same pyrotechnical actuator for both powered and unpowered modes of operation.

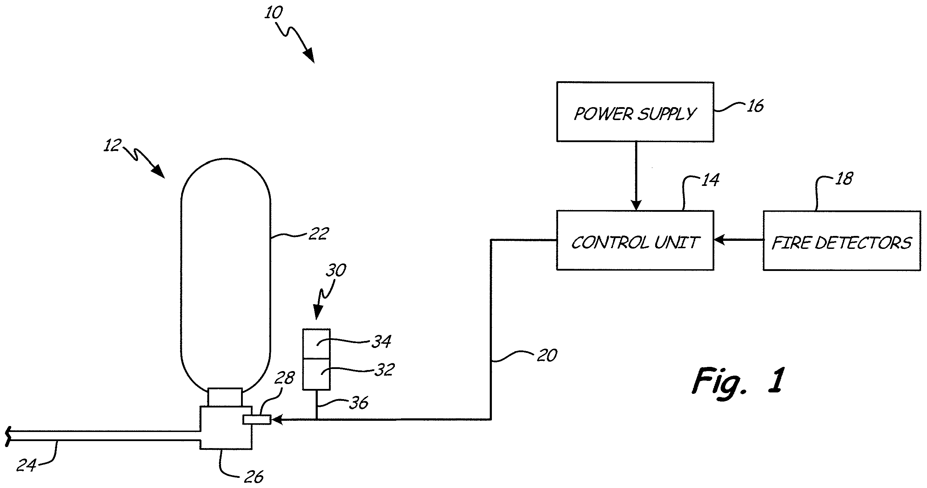

The mechanical detection mechanism based upon the temperature sensitive element is illustrated in the exemplary embodiments in Figs. 1-6. Referring to Fig. 1, a fire detection and suppression system 10 is shown. The system includes fire extinguisher 12, control unit 14, power supply 16, primary fire detector 18, and wiring leads 20. Primary fire detector 18 may include one or more smoke detectors, overheat detectors, optical flame detectors or similar devices known within the art. Similarly, wiring leads 20 are electrical wires or cables also known in the art. Control unit 14 will receive signals from primary fire detector 18 and send a signal to provide current to activate actuating mechanism 28. The current comes from power supply 16, which may be a generator, battery, or similar power source known within the art.

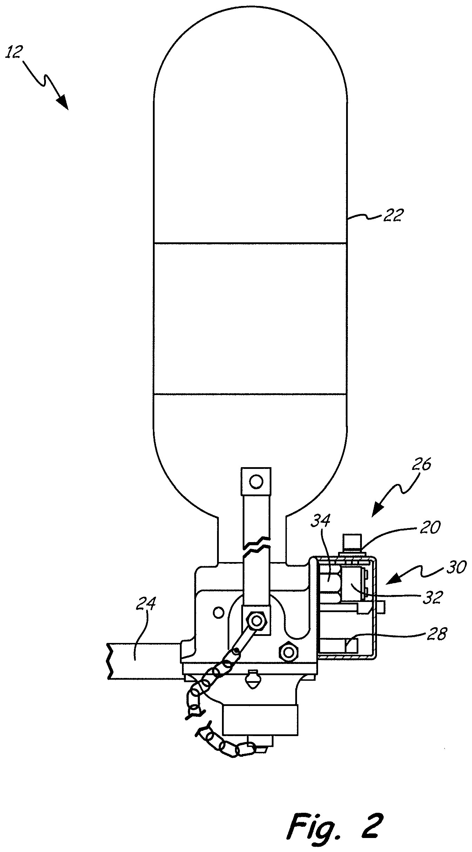

As illustrated in Figs. 1 and 2, Fire extinguisher 12 includes container 22, distribution system 24, valve assembly 26, actuating mechanism 28, and temperature activated force mechanism 30. In the embodiment of Fig. 1, temperature activated force mechanism 30 is located remotely from container 22, distribution system 24, valve assembly 26, and actuating mechanism 28. In the embodiment of Fig. 2, temperature activated force mechanism 30 is adjacent valve assembly 26, and in one embodiment may be in direct contact with valve assembly 26, actuating mechanism 28, and/or container 22.

Container 22 is a pressure vessel, often referred to as a bottle. Container 22 is constructed from a metal alloy or similar high strength rigid material that can withstand high pressure. Container 22 houses a fire extinguishing material, such as a fire retardant or fire suppressant, which may be either a fluid or particulate matter. A source of gas pressurizes the fire extinguishing material at least when the bottle is in a discharging condition and the fire extinguishing material is discharged through an outlet when fire extinguisher 12 is in the discharging condition. Valve assembly 26 connects container 22 with distribution system 24. Distribution system 24 as illustrated is a pipe or tube that will lead to one or more nozzles for spreading the fire extinguishing material over a selected area to be protected, although other systems are known to those of skill in the art.

Valve assembly 26 is connected to actuating mechanism 28. In one embodiment, fire extinguisher 12 is charged with compressed or liquefied gas, and valve assembly 26 is opened to actuate the extinguisher. In these extinguishers, a pyrotechnical actuator is supplied with an electric current that ignites an internal pyrotechnical charge. The lit charge is turned into mechanical energy, such as by linearly moving a firing pin. The firing pin pushes against a lever that turns a spindle. The spindle releases a beam that allows a plug to open in the valve, which allows for the compressed contents of the extinguisher to be released.

In another embodiment, valve assembly 26 has a valve element having a closed position sealing an outlet to the distribution system 24, and an open position permitting discharge of the suppressant through the outlet. In one embodiment, valve assembly contains a valve element that is shiftable from the closed position to the open position responsive to a pressure within the bottle exceeding a discharge threshold pressure, whereupon fire extinguisher 12 enters the discharging condition and discharges the fire extinguishing material through the outlet.

In various implementations, the valve element of valve assembly 26 may comprise a poppet having a head and a stem connected to the head. The head may have a fore surface facing the interior of container 22 and an opposite aft face from which the stem extends along a poppet axis. Valve assembly 26 may have a locking element which in the pre-discharge condition has a first portion engaged to the poppet and a second portion held relative to container 22. In the pre-discharge condition the locking element transmits force to the poppet which retains the poppet in the closed position and, responsive to the pressure within container 22 exceeding the discharge threshold pressure the locking element ruptures, whereupon the pressure within container 22 drives the poppet to the open position and fire extinguisher 12 enters the discharging condition. A valve return spring may bias the poppet toward the closed position. The return spring is effective to return the poppet from the open position to the closed position when the fire extinguishing material has been substantially discharged from fire extinguisher 12. In another embodiment, the pyrotechnical actuator applies force to release a locking element at which point the pressure within container 22 drives the poppet to the open position and fire extinguisher 12 enters the discharging condition.

The valve element may comprise a head having a fore face facing the interior of container 22 and an opposite aft face and a collapsible shaft between the head and a valve body. In the pre-discharge condition, when the pressure within container 22 is lower than the discharge pressure, axial compression of the shaft may be effective to resist rearward movement of the head and retain the head in the closed position. Responsive to the pressure within the bottle exceeding the discharge threshold pressure the shaft may collapse via buckling, whereupon the pressure within container 22 drives the head to the open position and fire extinguisher 12 enters the discharging condition. The source of gas to create pressure within container 22 may comprise a chemical propellant charge. The chemical propellant charge may have a combustion temperature of less than about 825° C. The chemical propellant charge may have gaseous combustion products consisting essentially of nitrogen, carbon dioxide, water vapor and mixtures thereof. The chemical propellant charge may consist essentially of a mixture of 5-aminotetrazole, strontium nitrate, and magnesium carbonate.

The source of gas may comprise a replaceable cartridge containing a chemical propellant charge. A cartridge holder assembly known within the art may hold the cartridge and may have a first end mounted within an aperture at an upper end of container 22 and a second end immersed within the suppressant when fire extinguisher 12 is in the pre-discharge condition. A closure may close the first end, and replaceable squib may be mounted within the closure. The discharge threshold pressure may be between about 2 MPa and about 10 MPa. The fire extinguishing material may be selected from the group consisting of PFC's, HFC's, water, and aqueous solutions. In this embodiment, actuating mechanism 28 includes a pin that is driven by a pyrotechnic charge. The pin will pierce the cartridge with the propellant to start the discharge of fire extinguishing material from container 22.

In one embodiment, fire extinguishing material is contained by container 22 when fire extinguisher 12 is in a pre-discharge condition. A replaceable cartridge contains a chemical propellant charge that is activated by actuating mechanism 28. Actuating mechanism 28 is a pyrotechnic charge for a gas generator in the cartridge. When activated, the gas generator releases a poppet that is spring biased toward a first position in which it blocks a path between the cartridge and the suppressant. Upon combustion of the propellant in the gas generator, the poppet shifts under pressure applied by combustion gasses to a second position wherein such path is unblocked and the combustion gasses may communicate with and pressurize fire extinguishing material in container 22.

Aside from being connected to power supply 16 via wiring leads 20, actuation mechanism 28 is also connected to temperature activated force mechanism 30. Temperature activated force mechanism 30 includes a temperature sensing apparatus 34, piezoelectric generator 32, and wiring leads 36. Again, wiring leads 36 are electrical wires or cables also known in the art. In an alternate embodiment, the system may not necessarily require control unit 14, separate power supply 16, and wiring 20 if the detection mechanism is a secondary mechanical detection system described further herein, and not primary fire detector 18.

Piezoelectric generator 32 is a piezoelectric device known within the art. For example, typical piezoelectric stack generators are manufactured by Piezo systems Inc. A technical concern with the use of piezoelectric generators is the susceptibility of piezoelectric devices to fail at temperatures close to the Curie temperature of the piezoelectric material. PZT has a typical Curie temperature of 350°C and should be able to function up to a temperature of at least 250°C. Higher temperature materials are also available, such as modified bismuth titanate, which is able to withstand temperatures in excess of 700°C.

As previously stated, actuating mechanism 28 may be a pyrotechnic actuator. Typical pyrotechnical actuators used in fire suppression systems, for example Metron™ actuators, require a firing pulse between 6-16mJ. The Metron™ actuators contain a charge that is lit to create a small explosion that forces out a firing pin. The firing pin actuates a lever, gear, or similar mechanical element that is used to operably move a valve from a closed position to an open position. Commercially available piezoelectric generators, built up from stacks of thin piezoelectric layers, can be designed to produce a high current, low voltage output and are capable of delivering 10-20mJ for an applied force of 1-2kN. These devices are therefore more than capable of supplying sufficient energy to directly fire a Metron™.

Typically piezoelectric stack generators are of the order of 20x5x5mm and are compatible with application of a force from a simple temperature sensitive spring loaded or fluid pressure driven detection mechanism. In order to generate a pulse of sufficient magnitude it will be necessary to apply the force from the detection element over a short period of time in the form of a short sharp impact.

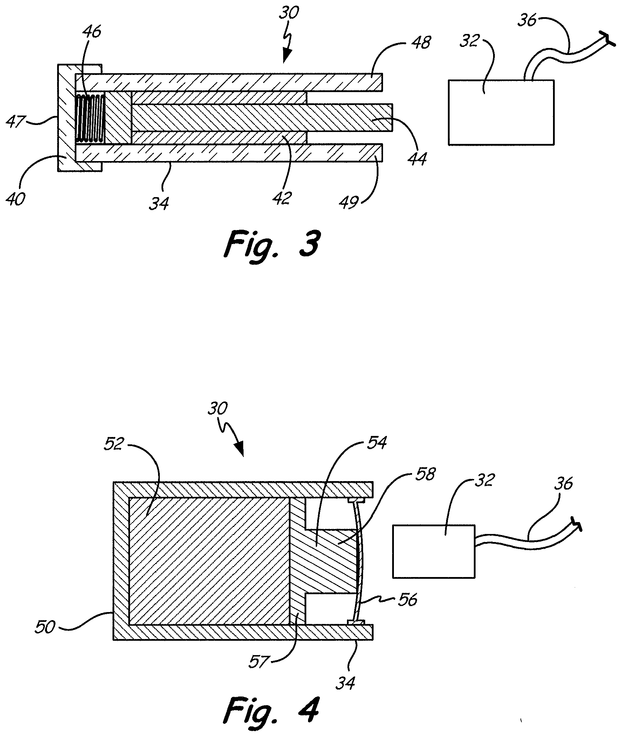

Several embodiments of temperature activated force mechanism 30 including temperature sensing apparatus 34 and piezoelectric generators 32 are illustrated in Figs. 3-6. Temperature sensing apparatus in some embodiments may have an activation temperature between 80°C and 250°C or higher, or any subset thereof, including an exemplary range of between 100°C and 125°C, and all components are designed as required by the specific application of the embodiment.

In Fig. 3, temperature sensing apparatus 34 includes housing 40, sensing element 42, actuation pin 44, and spring 46. Housing 40 includes base portion 47 and side walls 48 and 49, which are constructed from a metal alloy or similarly rigid and fire resistant material. The material should also allow for heat transfer through the walls 48 and 49 of housing 40. Actuation pin 44 is formed from a similar material as housing 40. The base of actuation pin is in contact with spring 46, while the center shaft is surrounded by sensing element 42. Spring 46 is illustrated as a metal coil spring in compression between base portion 47 of housing 40 and the base of actuation pin 44. In other embodiments, spring is any elastic or resilient structure capable of providing a force on the end of actuation pin 44.

Sensing element 42 is a temperature dependent material, such as eutectic solder or solidified salt solution. In the solid state, the temperature dependent material holds actuation pin in place, creating a compressive force on spring 46. Upon reaching a set threshold temperature, the solder or solidified eutectic salt solution will melt and become fluid. This will allow the stored compressive force on spring 46 to release and drive pin 44 towards piezoelectric generator 32. The force on the piezoelectric generator will create a current that is sent via wiring leads 36 to actuation mechanism 28 to spark the pyrotechnic charge therein, thus discharging the fire extinguishing material from fire extinguisher 12 either through the opening of a valve, or through the creation of pressure from the pyrotechnic charge acting as a gas generator as previously described. To fabricate the temperature sensing apparatus 34, actuation pin 44 is placed between the walls 48 and 49 of housing 40 at a preset distance from the base end. Liquid sensing element 42 is poured into housing 40 and allowed to set. Spring 46 is placed at the base of actuation pin 44 and base portion 47 is then placed into position, creating the compressive force on spring 46.

Fig. 4 illustrates a second embodiment of temperature sensing apparatus 34, which includes housing 50, sensing element 52, actuation pin 54, and diaphragm 56. Sensing element 52 is an intumescent material. The force to drive actuation pin 54 is supplied by the intumescent material. Housing 50 is constructed from a metal alloy, and acts to contain sensing element 52 on all sides, while allowing for linear motion in the direction of shaft 58 of pin 54. The intumescent material pushes against base 57 of actuation pin 54 which is held in place against the action of the intumescent material by diaphragm 56. When the intumescent material is heated above a threshold temperature, actuation pin 54 ruptures diaphragm 56 and shaft 58 of actuation pin 54 applies force to the piezoelectric generator 32, which creates a current sent to actuation mechanism 28 via wiring leads 36. An example of a suitable intumescent material is a thermostatic wax.

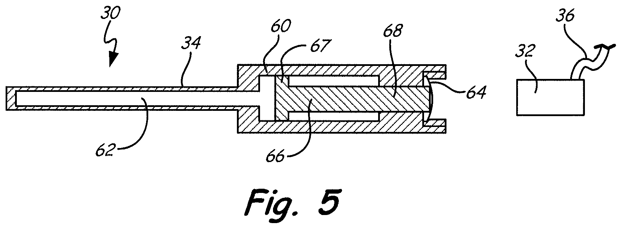

Fig. 5 illustrates a third embodiment of temperature sensing apparatus 34, which includes housing 60, sensing element 62, diaphragm 64, and pin 66. The unpowered linear heat detector of temperature sensing apparatus 34 generates force by the increase in pressure of a fluid contained within a thin sensing tube. In the particular example shown, sensing element 62 is the fluid pressure and applies force to base 67 of pin 66 which is held in place against the action of the fluid pressure by diaphragm 64. When the pressure of the fluid exceeds a threshold value due to an increase in temperature, shaft 68 of pin 66 ruptures diaphragm 64 and is forced out to apply force to the piezoelectric generator 32.

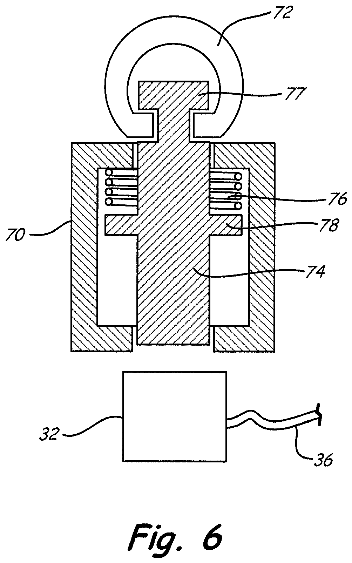

Fig. 6 illustrates a fourth embodiment of a temperature sensing apparatus, which includes housing 70, sensing element 72, pin 74 with head 77 and flange 78, and spring 76. In this embodiment, sensing element 72 is constructed from a shape memory alloy. The element is formed into a general ring shape that holds the head of pin 74 in place with respect to housing 70. Spring 76 is illustrated as a metal coil spring in compression between housing 70 and flange 78 of pin 74. Upon reaching a transition temperature, the shape memory alloy of sensing element 72 will change shape to an original straight rod, and retract from head 77 of pin 74. Spring 76 will exert a force on flange 78 to force pin 74 down through housing 70 to strike piezoelectric generator 32, providing the mechanical force to create an electrical current.

Piezoelectric stacks are relatively high cost elements (for example, around $100 in small volumes), and as such it would be preferable to use a lower cost (for example, <$5) single crystal such as those commonly used in piezoelectric igniters. The use of a piezoelectric stack to fire an existing pyrotechnical actuator is the direct use of the spark generated by a piezoelectric igniter to initiate combustion of the pyrotechnical charge in actuation mechanism 28. In one embodiment, this requires the use of a pyrotechnical actuator capable of being fired by a single electrical spark.

The spark generated by a piezoelectric igniter is more suited to the ignition of a flammable gas rather than a solid pyrotechnical charge; however, in a compact actuator a solid charge is required to generate sufficient force to drive the actuator. In one embodiment, a piezoelectric igniter is used to ignite a flammable gas which in turns ignites a pyrotechnical charge. In another embodiment, the device in which the spark electrodes are housed in a free space are separated by a thin gauze from the pyrotechnical charge. The free space would be filled with a flammable gas which could be ignited by a piezoelectric igniter to fire the pyrotechnical charge.

The benefits of the disclosed embodiments for the fire detection and suppression system are that the system provides a means for incorporating a secondary emergency release mechanism in an electrically operated system which operates in the event of system failure without the need to alter the design of the existing fire extinguisher design. Further, a means for using an unpowered, self contained detection mechanism with existing electrically operated extinguishers is now provided. Thus, with the embodiments disclosed, the system allows for a single pyrotechnical actuation element for use with either an electrically operated detection system or an unpowered mechanically operated detection system enabling commonality of parts between different installations. With the disclosed embodiments, there is no need to worry about power failures, electrical detection errors from the control unit and detection devices, or wire failures during a fire incident as the mechanical temperature sensing apparatus 34 will act as a backup and redundant system.

Although the present invention has been described with reference to preferred embodiments, workers skilled in the art will recognize that changes may be made in form and detail without departing from the scope of the invention.

## Claims

1. A fire extinguishing apparatus (12) comprising:
a structure (28) defining a first chamber containing an electrically operable explosive device;
a piezoelectric cell (32) electrically coupled to the electrically operable explosive device and capable of producing an electrical output in response to an impact upon the piezoelectric cell;
a pressure container (22) with a fire suppressant or fire retardant material therein;
a valve assembly (26) arranged to control the release of the contents of the pressure container; and
a temperature activated force mechanism (30) including a temperature sensing apparatus (34) for producing a mechanical force at an established temperature sensed by the temperature sensing apparatus;
the temperature activated force mechanism being arranged to apply the mechanical force produced by the temperature activated force mechanism to make the impact upon the piezoelectric cell to produce the electrical output to actuate the electrically operable explosive device to cause the valve assembly to open and release the contents of the pressure container.

2. The fire extinguishing apparatus of claim 1 wherein the temperature sensing apparatus comprises a eutectic solder (42).

3. The fire extinguishing apparatus of claim 2 wherein the temperature activated force mechanism comprises a spring (46) and an actuation pin (44), the eutectic solder retaining the pin below the established temperature and allowing it to be moved by the spring to apply the mechanical force above the established temperature.

4. The fire extinguishing apparatus of claim 1 wherein the temperature sensing apparatus comprises an intumescent material (52).

5. The fire extinguishing apparatus of claim 4 wherein the temperature activated force mechanism comprises a diaphragm (56) and an actuation pin (54), the diaphragm retaining the pin below the established temperature and the intumescent material causing the pin to rupture the diaphragm and apply the mechanical force above the established temperature.

6. The fire extinguishing apparatus of claim 1 wherein the temperature sensing apparatus comprises a shape memory alloy (72).

7. The fire extinguishing apparatus of claim 6 wherein the shape memory alloy is arranged to retain a spring-loaded pin (74) below the established temperature and to change shape to release the pin to apply the mechanical force above the established temperature.

8. The fire extinguishing apparatus of claim 1 wherein the temperature sensing apparatus comprises: a housing (60), a sensing fluid (62), a diaphragm (64), and an actuation pin (66).

9. The fire extinguishing apparatus of claim 8 wherein the diaphragm is arranged to retain the pin below the established temperature and the sensing fluid causes the pin to rupture the diaphragm and apply the mechanical force above the established temperature.

10. The fire extinguishing apparatus of any preceding claim wherein the temperature sensing apparatus has an activation temperature between 80 degrees Celsius and 250 degrees Celsius.

11. A fire detection and suppression system (10) comprising:
at least one fire detection apparatus (18);
a power supply (16);
a control unit (14); and
the fire extinguishing apparatus (12) of any of the preceding claims.

## Patentansprüche

1. Feuerlöschvorrichtung (12), die Folgendes umfasst:
eine Struktur (28), die eine erste eine elektrisch bedienbare Sprengvorrichtung enthaltende Kammer definiert;
eine piezoelektrische Zelle (32), die elektrisch an eine elektrisch bedienbare Sprengvorrichtung gekoppelt ist und fähig ist, einen elektrischen Ausgang als Reaktion auf eine Einwirkung auf die piezoelektrische Zelle zu produzieren;
einen Druckbehälter (22) mit einem darin enthaltenen feuerlöschenden oder feuerhemmenden Material;
eine Ventilanordnung (26), die angeordnet ist, um den Ausstoß des Inhalts des Druckbehälters zu steuern; und
einen temperaturaktivierten Kraftmechanismus (30), der eine Temperaturmessvorrichtung (34) umfasst, um eine mechanische Kraft bei einer festgelegten Temperatur, die von der Temperaturmessvorrichtung gemessen wird, zu produzieren;
der temperaturaktivierte Kraftmechanismus ist angeordnet, um die mechanische Kraft anzuwenden, die vom temperaturaktivierten Kraftmechanismus produziert wird, um die Einwirkung auf die piezoelektrische Zelle zu tätigen, um den elektrischen Ausgang zu produzieren, um die elektrisch bedienbare Sprengvorrichtung zu aktivieren, um die Ventilanordnung zum Öffnen zu bringen und den Inhalt des Druckbehälters freizusetzten.

2. Feuerlöschvorrichtung nach Anspruch 1, wobei die Temperaturmessvorrichtung ein eutektisches Lot (42) umfasst.

3. Feuerlöschvorrichtung nach Anspruch 2, wobei der temperaturaktivierte Kraftmechanismus eine Feder (46) und einen Betätigungsstift (44) umfasst, wobei das eutektische Lot den Stift unter der festgelegten Temperatur hält und ihm erlaubt, von der Feder bewegt zu werden, um die mechanische Kraft über der festgelegten Temperatur auszuüben.

4. Feuerlöschvorrichtung nach Anspruch 1, wobei die Temperturmessvorrichtung ein intumeszierendes Material (52) umfasst.

5. Feuerlöschvorrichtung nach Anspruch 4, wobei der temperaturaktivierte Kraftmechanismus eine Membran (56) und ein Betätigungsstift (54) umfasst, wobei die Membran den Stift unter der festgelegten Temperatur hält, und wobei das intumeszierende Material bewirkt, dass der Stift die Membran zum Zerreißen bringt und die mechanische Kraft über der festgelegten Temperatur ausübt.

6. Feuerlöschvorrichtung nach Anspruch 1, wobei die Temperaturmessvorrichtung eine Formgedächtnislegierung (72) umfasst.

7. Feuerlöschvorrichtung nach Anspruch 6, wobei die Formgedächtnislegierung angeordnet ist, um einen federbelasteten Stift (74) unter der festgelegten Temperatur zu halten, und um die Form zu ändern, um den Stift freizugeben, um die mechanische Kraft über der festgelegten Temperatur auszuüben.

8. Feuerlöschvorrichtung nach Anspruch 1, wobei die Temperaturmessvorrichtung Folgendes umfasst: ein Gehäuse (60), eine Messflüssigkeit (62), eine Membran (64) und einen Betätigungsstift (66).

9. Feuerlöschvorrichtung nach Anspruch 8, wobei die Membran angeordnet ist, um den Stift unter der festgelegten Temperatur zu halten, und die Messflüssigkeit bewirkt, dass der Stift die Membran zerreißt und die mechanische Kraft über der festgelegten Temperatur ausübt.

10. Feuerlöschvorrichtung nach einem der vorherigen Ansprüche, wobei die Temperaturmessvorrichtung eine Aktivierungstemperatur zwischen 80 Grad Celsius und 250 Grad Celsius aufweist.

11. Feuermelde- und Feuerlöschanlage (10), die Folgendes umfasst:
mindestens eine Feuerdetektionsvorrichtung (18);
eine Stromversorgung (16);
eine Steuereinheit (14); und
eine Feuerlöschvorrichtung (12) nach einen der vorherigen Ansprüche.

## Revendications

1. Appareil extincteur de feu (12) comprenant :
une structure (28) définissant une première chambre contenant un dispositif explosif à fonctionnement électrique ;
une cellule piézoélectrique (32) couplée électriquement au dispositif explosif à fonctionnement électrique et capable de produire une sortie électrique en réponse à un impact sur la cellule piézoélectrique ;
un récipient sous pression (22) avec un matériau extincteur de feu ou ignifuge dans celui-ci ;
un ensemble soupape (26) conçu pour commander la libération du contenu du récipient sous pression ; et
un mécanisme de force activé par la température (30) comprenant un appareil de détection de température (34) pour produire une force mécanique à une température établie détectée par l'appareil de détection de température ;
le mécanisme de force activé par la température étant conçu pour appliquer la force mécanique produite par le mécanisme de force activé par la température pour rendre l'impact sur la cellule piézoélectrique pour produire la sortie électrique pour actionner le dispositif explosif à fonctionnement électrique pour amener l'ensemble soupape à ouvrir et à libérer le contenu du récipient sous pression.

2. Appareil extincteur de feu selon la revendication 1 dans lequel l'appareil de détection de température comprend une brasure eutectique (42).

3. Appareil extincteur de feu selon la revendication 2 dans lequel le mécanisme de force activé par la température comprend un ressort (46) et une broche d'actionnement (44), la brasure eutectique retenant la broche au-dessous de la température établie et lui permettant d'être déplacée par le ressort pour appliquer la force mécanique au-dessus de la température établie.

4. Appareil extincteur de feu selon la revendication 1 dans lequel l'appareil de détection de température comprend un matériau intumescent (52).

5. Appareil extincteur de feu selon la revendication 4 dans lequel le mécanisme de force activé par la température comprend un diaphragme (56) et une broche d'actionnement (54), le diaphragme retenant la broche au-dessous de la température établie et le matériau intumescent amenant la broche à rompre le diaphragme et à appliquer la force mécanique au-dessus de la température établie.

6. Appareil extincteur de feu selon la revendication 1 dans lequel l'appareil de détection de température comprend un alliage à mémoire de forme (72).

7. Appareil extincteur de feu selon la revendication 6 dans lequel l'alliage à mémoire de forme est conçu pour retenir une broche à ressort (74) au-dessous de la température établie et pour changer de forme pour libérer la broche pour appliquer la force mécanique au-dessus de la température établie.

8. Appareil extincteur de feu selon la revendication 1 dans lequel l'appareil de détection de température comprend : un boîtier (60), un fluide de détection (62), un diaphragme (64) et une broche d'actionnement (66).

9. Appareil extincteur de feu selon la revendication 8 dans lequel le diaphragme est conçu pour retenir la broche au-dessous de la température établie et le fluide de détection amène la broche à rompre le diaphragme et à appliquer la force mécanique au-dessus de la température établie.

10. Appareil extincteur de feu selon une quelconque revendication précédente dans lequel l'appareil de détection de température a une température d'activation entre 80 degrés Celsius et 250 degrés Celsius.

11. Système de détection et de suppression de feu (10) comprenant :
au moins un appareil de détection de feu (18) ;
une alimentation électrique (16) ;
une unité de commande (14) ; et
l'appareil extincteur de feu (12) selon l'une quelconque des revendications précédentes.
